# EUROPEAN PATENT SPECIFICATION

(11) **EP 1 774 100 B1**
(45) Date of publication and mention of the grant of the patent: **21.10.2009**
(21) Application number: 05771020.4
(22) Date of filing: 06.07.2005
(51) Int. Cl.: D21H 21/36

(54) **PAPER SUBSTRATES CONTAINING AN ANTIMICROBIAL COMPOUND AS WELL AS METHODS OF MAKING AND USING THE SAME**
PAPIERSUBSTRATE MIT ANTIMIKROBIELLER VERBINDUNG SOWIE HERSTELLUNGS- UND ANWENDUNGSVERFAHREN DAFÜR
SUBSTRATS DE PAPIER CONTENANT UN COMPOSÉ ANTIMICROBIEN ET PROCÉDÉS DE FABRICATION ET MODES D'UTILISATION DESDITS SUBSTRATS

(30) Priority: 06.07.2004 US 585757 P
(43) Date of publication of application: 18.04.2007
(73) Proprietor: INTERNATIONAL PAPER COMPANY, Stamford, CT 06921 (US)
(72) Inventor: HOLBERT, Victor, P., Loveland, OH 45140 (US); KULKARNI, Sandeep, Morrow, OH 45152 (US); WILLIAMS, Richard, C., Loveland, OH 45140 (US); FABER, Richard, D., Memphis, TN 38119 (US)
(74) Representative: Kunz, Herbert
(86) International application number: PCT/US2005/023868
(87) International publication number: WO 2006/014446

(56) References cited:
- EP-A- 1 527 685
- WO-A-02/085539
- US-A- 3 560 332
- US-A- 3 936 339
- US-A- 4 533 435
- US-A1- 2002 083 671
- US-A1- 2003 170 317
- US-A1- 2004 149 409
- PATENT ABSTRACTS OF JAPAN vol. 2003, no. 11, 5 November 2003 (2003-11-05) & JP 2003 201700 A (SANYO ITAGAMI KOGYO KK), 18 July 2003 (2003-07-18)

## Description

### Field of the Invention

The invention relates to the papermaking art and, in particular, to the manufacture of paper substrates, paper-containing articles such as file folders, having improved reduction or inhibition in the growth of microbes, mold and/or fungus.

### Background of the Invention

Heavy weight cellulosic paper and paperboard webs and products made from the same such as file folders and paperboard file containers are often subject to damage during growth of microbes such as mold and fungus during storage long term storage. The prevalence of microbial growth increases as the storage time increases. During microbial growth, many aesthetic properties of the paper substrate are diminished and further the materi als may become soggy, warped and/or weakened thereby reducing their usefulness and potentially allowing the microbes to contact and damage documents which may be stored in containers made with the paper or paperboard materials.

Internal, e.g. the addition of agents to the paper making process prior to the size press (e.g. wet end) and/or surface sizing, e.g., the addition of agents to the surface of a paper sheet that has been at least partially dried, are widely practiced in the paper industry, particularly for printing grades to improved the quality thereof. Some functional agents include, but are not limited to the most widely used additive: starch. However, starch alone has not been effective in preventing microbial growth on paper substrates and products containing the same. In fact, starch may actually promote microbial growth on paper substrates and products containing the same.

Examples of applying antimicrobial chemistries to cellulose-containing articles can be found in US Patent No. 3,936,339. However, the articles according to this reference are related to packaging materials.

Examples of applying antimicrobial chemistries to gypsum board can be found in US Patent Application Publication Nos. 20020083671; 20030037502 and 20030170317. All of which pertain to gypsum containing products.

WO-A-02/085539 discloses an antimicrobial compound in paper to provide a paper or paperboard product having enhanced long term storageability. US-A-4,533,435 discloses an antimicrobial paper having an improved printability. US-A-3,560,332 discloses a moldproof paper produced by adding water-soluble di(phenylmercuric)-ammonium salts of aliplhatic carboxylic acids to a partially or fully dried web of paper. JP-A-2003201700 discloses a paper having antibacterial properties comprising an antibacterial layer containing polyvinyl alcohol and an antibacterial agent.

While all of the above examples aid to provide materials with antimicrobial tendency by applying antimicrobial chemistries and compounds to the material and/or components thereof, none sufficiently provide for a paper substrate that is acceptable by commercial market standards in a manner that inhibits, retards, and/or resists antimicrobial growth over an acceptable duration of time, nor do they provide for an acceptable method of making and using the same.

Accordingly, there exists a need for a paper substrate and articles made therefrom that inhibit, retard, and/or resist microbial growth over an acceptable duration of time so as to provide, in part, paper articles and paper-based containers having improved aesthetic properties, durability and capacity to protect articles contained thereby.

### SUMMARY OF THE INVENTION

The present invention relates to a method of making a paper substrate by contacting cellulose fibers with an antimicrobial compound during or prior to a papermaking process. One embodiment of the present invention includes instances where the cellulose fibers are contacted with the antimicrobial compound at the wet end of the papermaking process, thin stock, thick stock, machine chest, the headbox, size press, coater, shower, sprayer, steambox, or a combination thereof. Another embodiment of the present invention includes making paper articles and/or paper packages from the above-mentioned substrates, including file folders that may be die-cut.

The present invention relates to a method of making a paper substrate by contacting cellulose fibers with an antimicotic or fungicide as defined in present claim 1 during or prior to a papermaking process where the contacting occurs at the size press and produces a paper substrate comprising a first layer comprising a web of cellulose fibers and a size-press applied coating layer in contact with at a portion of at least one surface of the first layer so that from 25 to 75% of the size-press applied coating layer interpenetrates the first layer. Another embodiment of the present invention includes making paper articles and/orpaper packages from the above-mentioned substrates, including file folders that may be die-cut.

The present invention further relates to any and all paper or paperboard articles, including packages and packaging materials that may contain the paper substrates made according to the method of the present invention.

Additional aspects and embodiments of the present invention are described hereinbelow.

### BRIEF DESCRTTION OF THE DRAWINGS

Figure 1: A first schematic cross section of just one exemplified embodiment of the paper substrate that is included in the paper substrate made according to the method of the present invention.
Figure 2: A second schematic cross section of just one exemplified embodiment of the paper substrate that is included in the paper substrate made according to the method of the present invention.
Figure 3: A third schematic cross section of just one exemplified embodiment of the paper substrate that is included in the paper substrate made according to the method of the present invention.

### DETAILED DESCRIPTION OF THE INVENTION

The inventors of the present technology have discovered that a paper substrate made according to the method of the invention, paperboard material, and articles such as packaging and packaging materials made therefrom, all have antimicrobial tendency by applying antimicrobial chemistries and compounds to the material and/or components thereof. Further, the paper or paperboard substrate made according to the method of the present invention inhibits, retards, and/or resists antimicrobial growth over an acceptable duration of time.

The paper substrate made according to the method of the present invention may contain recycled fibers and/or virgin fibers. Recycled fibers differ from virgin fibers in that the fibers have gone through the drying process several times.

The paper substrate made according to the method of the present invention may contain from 1 to 100 wt%, preferably from 50 to 100 wt%, most preferably from 80 to 100 wt% ofcellulose fibers based upon the total weight of, the substrate, including 1, 5, 10, 15, 20, 25, 30, 35, 40, 45, 50, 55, 60, 65, 70, 75, 80, 85, 90, 95 and 99 wt%, and including any and all ranges and subranges therein. More preferred amounts of cellulose fibers range from wt%.

Preferably, the sources of the cellulose fibers are from softwood and/or hardwood. The paper substrate made according to the method of the present invention may contain from 1 to 99 wt%, preferably from 5 to 95 wt%, cellulose fibers originating from softwood species based upon the total amount of cellulose fibers in the paper substrate. This range includes 5, 10, 15, 20, 25, 30, 35, 40, 45, 50, 55, 60, 65, 70, 75, 80, 85, 90, 95, and 100wt%, including any and all ranges and subranges therein, based upon the total amount of cellulose fibers in the paper substrate.

The paper substrate made according to the method of the present invention may contain from 1 to 99 wt%, preferably from 5 to 95 wt%, cellulose fibers originating from hardwood species based upon the total amount of cellulose fibers in the paper substrate. This range includes 5, 10, 15, 20, 25, 30, 35, 40, 45, 50, 55, 60, 65, 70, 75, 80, 85, 90, 95, and 100wt%, including any and all ranges and subranges therein, based upon the total amount of cellulose fibers in the paper substrate.

Further, the softwood and/or hardwood fibers contained by the paper substrate made according to the method of the present invention may be modified by physical and/or chemical means. Examples of physical means include, but is not limited to, electromagnetic and mechanical means. Means for electrical modification include, but are not limited to, means involving contacting the fibers with an electromagnetic energy source such as light and/or electrical current. Means for mechanical modification include, but are not limited to, means involving contacting an inanimate object with the fibers. Examples of such inanimate objects include those with sharp and/or dull edges. Such means also involve, for example, cutting, kneading, pounding, impaling, etc means.

Examples of chemical means include, but is not limited to, conventional chemical fiber modification means including crosslinking and precipitation of complexes thereon. Examples of such modification of fibers may be, but is not limited to, those found in the following patents 6,592,717, 6,592,712, 6,582,557, 6,579,415, 6,579,414, 6,506,282, 6,471,824, 6,361,651, 6,146,494, H1,704, 5,731,080, 5,698,688, 5,698,074, 5,667,637, 5,662,773, 5,531,728, 5,443,899, 5,360,420, 5,266,250, 5,209,953, 5,160,789, 5,049,235, 4,986,882, 4,496,427, 4,431,481, 4,174,417, 4,166,894, 4,075,136, and 4,022,965.

The paper substrate made according to the method of the present invention contains an antimicrobial compound.

Antimicotics, fungicides are examples of antimicrobial compounds. Antimicrobial compounds may retard, inhibit, reduce, and/or prevent the tendency ofmicrobial growth over time on/in a product containing such compounds as compared to that tendency of microbial growth on/in a product not containing the antimicrobial compounds. The antimicrobial compound when incorporated into the paper substrate made according to the method of the present invention preferably retards, inhibits, reduces, and/or prevents microbial growth for a time that is at least 5, 10, 15, 20, 25, 30, 35, 40, 45, 50, 75, 100, 125, 150, 200, 250,300, 350, 400, 50, 500, 550, 600, 700, 800, 900, 1000% greater than that of a paper substrate that does not contain an antimicrobial compound, including all ranges and subranges therein.

Antimicotic compounds are, in part, mold resistant. Fungicide compounds are, in part, fungus resistant. The antimicrobial compound may have other functions and activities than provide either mold resistance and/or fungus resistance to a product containing the same.

The antimicrobial compound may also be mildew, bacteria and/or virus resistant. A mold specifically targeted, but meant to be non-limiting, is Black mold as applied to the above-mentioned paper substrate of the present invention.

It is preferable for the antimicotic and/or fungicide to be effective to be able to be applied in aqueous solution and/or suspension at the coater and/or head box and/or size press. Further it is preferable for the antimicotic and/or fungicide to not be highly toxic to humans.

The antimicotic and/or fungicide may be water insoluble and/or water soluble, most preferably water insoluble. The antimicotic and/or fungicide may be volatile and/or non-volatile, most preferably non-volatile. The antimicotic and/or fungicide may be organic and/or inorganic. The antimicotic and/or fungicide may be polymeric and/or monomeric.

The antimicotic and/or fungicide may be multivalent which means that the agent may carry one or more active compounds so as to protect against a wider range of mold, mildew and/or fungus species and to protect from evolving defense mechanisms within each species of mold, mildew and/or fungus.

Any water-soluble salt of pyrithione having antimicrobial properties is useful as the antimicrobial compound. Pyrithione is known by several names, including 2 mercaptopyridine-N-oxide; 2-pyridinethiol-1-oxide (CAS Registry No. 1121-31-9); 1-hydroxypyridine-2-thione and 1 hydroxy-2(1H)-pyridinethione (CAS Registry No. 1121-30-8). The sodium derivative, known as sodium pyrithione (CAS Registry No. 3811-73-2), is one embodiment of this salt that is particularly useful. Pyrithione salts are commercially available from Arch Chemicals, Inc. of Norwalk, Conn., such as Sodium OMADINB or Zinc OMADINE.

Examples of the antimicrobial compound may include silver-containing compound, zinc-containing compound, an isothiazolone-containing compound, a benzothiazole-containing compound, a triazole-containing compound, an azole-containing compound, a benzimidazol-containing compound a nitrile containing compound, alcohol-containing compound, a silane-containing compound, a carboxylic acid-containing compound, a glycol-containing compound, a thiol-containing compound or mixtures thereof

Additional exemplified commercial antimicrobial compounds may include those from Intace including B-6773 and B-350, those from Progressive Coatings VJ series, those from Buckman Labs including Busan 1218, 1420 and 1200WB, those from Troy Corp including Polyphase 641, those from Clariant Corporation, including Sanitized TB 83-85 and Sanitized Brand T 96-21, and those from Bentech LLC incuding Preservor Coater 36. Others include AgION (silver zeolite) from AgION and Mircroban from Microban International (e.g. Microban additive TZ1, S2470, and PZ2). Further examples include dichloro-octyl-isothiazolone, Tri-n-butylin oxide, borax, G-4, chlorothalonil, organic fungicides, and silver-based fungicides. Any one or more of these agents would be considered satisfactory as an additive in the process of making paper material. Further commercial products may be those from AEGIS Environments (e.g. AEM 5772 Antimicrobial), from BASF Corporation (e.g. propionic acid), from Bayer (e.g. Metasol TK-100, TK-25), those from Bendiner Technologies, LLC, those from Ondei-Nalco (e.g. Nalcon 7645 and 7622), and those from Hercules (e.g. RX 8700, RX 3100, and PR 1912).

Still further, examples of the antimicrobial compounds may include silver zeolite, dichloro-octyl-isothiazolone, 4,5-dichloro-2-n-octyL-3(2H)-isothiazolone, 5-chloro-2-methyl-4-isothiazolin-3-one, 1,2-benzothiazol-3(2H)-one, poly[oxyethylene(ethylimino)ethylene dichloride], Tri-n-butylin oxide, borax, G-4, chlorothalonil, Alkyl-dimethylbenzyl-amrinonium saccharinate, dichloropeyl-propyl-dioxolan-methlyl-triazole, alpha-chlorphenyl, ethyl-dimethylethyl-trazole-ethanol, benzimidazol, 2-(thiocyanomethythio)benzothiazole, alpha-2(-(4-chlorophenyl)ethyl)-alpha-(1-1-dimethylethyl)-1H-1,2,4-triazole-1-ethanol, (1-[[2-(2,4-dichlarophenyl)-4-propyl-1,3-dioxolan-2-yl]-methyl]-1H-1,2,4-triazole, alkyl dimethylbenzyl ammonium saccharinate, 2-(methoxy-carbamoyl)-benzimidazol, tetracholorisophthalonitrile, P-[(diiodomethyl) sulfonyl] toluol, methyl alcohol, 3-(trimethoxysilyl) propyldimethyl octadecyl ammonium chloride, chloropropyltrimethylsilane, dimethyl octadecyllamine, propionic acid, 2-(4-thiazolyl)benzimidezole, 1,2-benzisothiazolin-3-one,2-N-octyl-4-isthiazolin-3-one, diethylene glycol monoethyl ether, ethylene glycol, propylene glycol, hexylene glycol, tributoxyethyl phosphate, 2-pyridinethio-1-oxide, potassium sorbate, diiodomethyl-p-tolysulfone, citric acid, lemon grass oil, and thiocyanomethythio-benzothiazole.

The antimicrobial compound may be present in the paper substrate made according to the method of the present invention at amounts from 1 to 5000 ppm dry weight, more preferably, from 100 to 3000 ppm dry weight, most preferably 50 to 1500 ppm dry weight The amounts of antimicotic and/or fungicide may be 2, 5, 10, 25, 50, 75, 100, 12, 150, 175, 200, 225, 250, 275, 300, 325, 350, 375, 400, 425, 450, 475, 500, 600, 700, 800, 900, 1000, 1100, 1200, 1300, 1400, 1500,1600, 1700, 1800, 1900, 2000, 2100, 2200, 2300, 2400, 2500, 2600, 2700, 2800, 2900, 3000, 3200, 3500, 3750, 4000, 4250, 4500, 4750, and 5000 ppm dry weight based upon the total weight of the paper substrate, including all ranges and subranges therein. Higher amounts of such antimicotic and/or fungicide may also prove produce an antibacterial paper material and article therefrom as well. These amount are based upon the total weight of the paper substrate.

The paper substrate made according to the method of the present invention, when containing the web of cellulose fibers and an antimicrobial compound, may contain them in a manner in which the antimicrobial compound is on the surface of or within from 1 to 100% of the web. The paper substrate may contain the antimicrobial compound on the surface of and/or within 1, 2, 5, 10, 15, 20, 25, 30, 35, 40, 45, 50, 55, 60, 65, 70, 75, 80, 85, 90, 95 and 100% of the web, including all ranges and subranges therein.

When the antimicrobial compound is present on at least one surface of the web, it is preferable that the antimicrobial compound also be within 1, 2, 5, 10, 15, 20, 25, 30, 35, 40, 45, 50, 55, 60, 65, 70, 75, 80, 85, 90, 95 and 100% of the web, including all ranges and subranges therein.

In another embodiment, it is preferable that, when the antimicrobial compound is within the web, it is approximately dispersed evenly throughout 1, 2, 5, 10, 15, 20, 25, 30, 35, 40, 45, 50, 55, 60, 65, 70, 75, 80, 85, 90, 95 and 100% of the web. However, concentration gradients of the antimicrobial compound may occur within the web as a function of the cross section of the web itself. Such gradients are dependent upon the methodology utilized to make this product. For instance, the concentration of the antimicrobial compound may increase as the distance from a center portion of the cross-section of the web increases. That is, the concentration increases as one approaches the surface of the web. Further, the concentration of the antimicrobial compound may decrease as the distance from a center portion of the cross-section of the web decreases. That is, the concentration decreases as one approaches the surface of the web. Still further, the concentration of the antimicrobial compound is approximately evenly distributed throughout the portion of the web in which it resides. All of the above embodiments may be combined with each other, as well as with an embodiment in which the antimicrobial compound resides on at least one surface of the web.

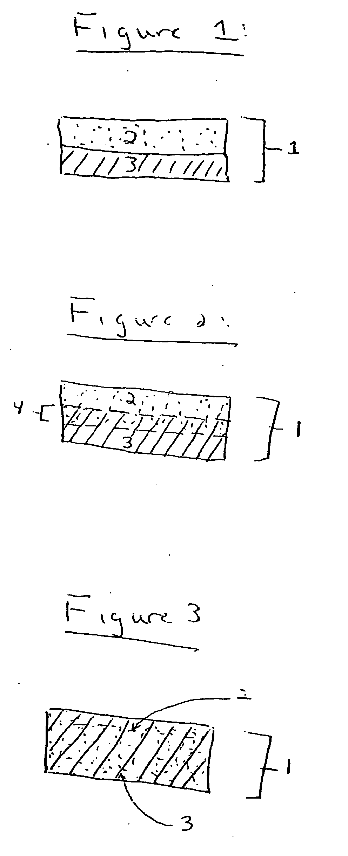

Figures 1-3 demonstrate different embodiments of the paper substrate **1** in the paper substrate made according to the method of the present invention. Figure 1 demonstrates a paper substrate **1** that has a web of cellulose fibers **3** and a composition containing an antimicrobial compound **2** where the composition containing an antimicrobial compound **2** has minimal interpenetration of the web of cellulose fibers **3.** Such an embodiment may be made, for example, when an antimicrobial compound is coated onto a web of cellulose fibers.

Figure 2 demonstrates a paper substrate **1** that has a web of cellulose fibers **3** and a composition containing an antimicrobial compound **2** where the composition containing an antimicrobial compound **2** interpenetrates the web of cellulose fibers **3**. The interpenetration layer **4** of the paper substrate **1** defines a region in which at least the antimicrobial compound penetrates into and is among the cellulose fibers. The interpenetration layer may be from 1 to 99% of the entire cross section of at least a portion of the paper substrate, including 1, 2, 5, 10, 15, 20, 25, 30, 35, 40, 45, 50, 55, 60, 65, 70, 75, 80, 85, 90, 95, and 99% of the paper substrate, including any and all ranges and subranges therein. Such an embodiment may be made, for example, when an antimicrobial compound is added to the cellulose fibers prior to a coating method and may be combined with a subsequent coating method if required. Addition points may be at the size press, for example.

Figure 3 demonstrates a paper substrate **1** that has a web of cellulose fibers 3 and an antimicrobial compound **2** where the antimicrobial compound **2** is approximately evenly distributed throughout the web of cellulose fibers **3**. Such an embodiment may be made, for example, when an antimicrobial compound is added to the cellulose fibers prior to a coating method and may be combined with a subsequent coating method if required. Exemplified addition points may be at the wet end of the paper making process, the thin stock, and the thick stock.

The web of cellulose fibers and the antimicrobial compound may be in a multilayered structure. The thicknesses of such layers may be any thickness commonly utilized in the paper making industry for a paper substrate, a coating layer, or the combination of the two. The layers do not have to be of approximate equal size. One layer may be larger than the other. One preferably embodiment is that the layer of cellulose fibers has a greater thickness than that of any layer containing the antimicrobial compound. The layer containing the cellulose fibers may also contain, in part, the antimicrobial compound.

The density, basis weight and caliper of the web made according to the method of this invention may vary widely and conventional basis weights, densities and calipers may be employed depending on the paper-based product formed from the web. Paper or paperboard made according to the method of invention preferably have a final caliper, after calendering of the paper, and any nipping or pressing such as may be associated with subsequent coating of from 25.4µm (1 mils) to 889µm (35 mils) although the caliper can be outside of this range if desired. More preferably the caliper is from 101.6µm (4 mils) to 508µm (20 mils), and most preferably from 177.8µm (7 mils) to 431.8µm (17 mils). The caliper of the paper substrate with or without any coating may be 25.4, 50.8, 76.2, 101.6, 127, 152.4, 177.8, 203.2, 228.6, 254, 279.4, 304.8, 330.2, 355.6. 381, 431.8, 508. 558.8, 635, 685.8, 762, 812.8, 889 (1, 2, 3, 4, 5, 6, 7, 8, 9, 10, 11, 12, 13, 14, 15, 17, 20, 22, 25, 27, 30, 32, and 35), including any and all ranges and subranges therein.

Paper substrates made according to the method of the invention preferably exhibit basis weights of from 16.30g/m² (10 lb/3000ft²) to 815g/m² (500 lb/3000ft²), although web basis weight can be outside of this range if desired. More preferably the basis weight is from 48.90g/m² (30lb/3000ft²) to 326.00g/m² (200 lb/3000ft²), and most preferably from 57.05g/m² (35 lb/3000ft²) to 244.50g/m² (150 lb/3000ft²). The basis weight may be 16.30, 19.56, 24.45, 27.7, 32.6, 35.86, 40.75, 48.90, 52.16, 57.05, 60.31, 65.20, 73.35, 81.50, 89.65, 97.80, 105.95, 114.10, 122.25, 130.40, 138.55, 146.70, 154.85, 163.00, 179.30, 195.60, 211.90, 228.20, 244.50, 260.80, 277.10, 293,40, 309.70, 326.00, 366.75, 407.50, 448.25, 489.00, 529.75, 570.50, 611.25, 652.00, 692.75, 733.50, 815.00 (10, 12, 15, 17, 20, 22, 25, 30, 32, 35, 37, 40, 45, 50, 55, 60, 65, 70, 75, 80, 85, 90, 95, 160, 110, 120, 130, 140, 150, 160, 170, 180, 190, 200, 225, 250, 275, 300, 325, 350, 375, 400, 425, 450, 500 lb/3000ft²), including any and all ranges and subranges therein.

The final density of the papers may be calculated by any of the above-mentioned basis weights divided by any of the above-mentioned calipers, including any and all ranges and subranges therein. Preferably, the final density of the papers, that is, the basis weight divided by the caliper, is preferably from 0.385 g/cm³ (6 lb/3000ft²/mil) to 0.897g/cm³ (14 lb/3000ft²/mil) although web densities can be outside of this range if desired. More preferably the web density is from 0.449g/cm³ (7 lb/3000ft²/mil) to 0.833 g/cm³ (13 lb/3000ft²/mil) and most preferably from 0.577g/cm³ (9 lb/3000ft²/mil) to 0.769g/cm³ (12 lb/3000ft²/mil).

The paper substrate made according to the method of the present invention containing the web and the antimicrobial compound has the capability to retard, inhibit, reduce, and/or prevent the tendency of microbial growth over time on/in its web containing such compounds as compared to that tendency of microbial growth on/in a product not containing the antimicrobial compound. Further, the paper substrate made according to the method of the present invention may also bestow such tendency on additional materials of which it may comprise and/or with which it may be in contact. Still further, the paper substrate made according to the method of the present invention may also bestow this tendency upon any article, packaging, and/or packaging of which it may eventually be a component therein.

The article, packaging, and/or packaging made according to the method of the present invention may have an antimicrobial tendency that preferably retards, inhibits, reduces, and/or prevents microbial growth for a time that is at least 5% greater than that of an article, packaging, and/or packaging that does not contain an antimicrobial compound. Preferably, such tendency is at least 5, 10, 15, 20, 25, 30, 35, 40, 45, 50, 75, 100, 125, 150, 200, 250, 300, 350, 400, 450, 500, 550, 600, 700, 800, 900, 1000% greater than that of a article, packaging, and/or packaging that does not contain an antimicrobial compound, including all ranges and subranges therein.

The paper substrate's antimicrobial tendency may be measured in part by ASTM standard testing methodologies such as D 2020-92, E 2180-01,0 21-966, C1338, and D2020, all of which can be found as published by ASTM.

Textbooks such as those described in the "Handbook for pulp and paper technologists" by GA. Smook (1992), Angus Wilde Publications.

Further, G.A. Smook referenced above and references cited therein provide lists of conventional additives that may be contained in the paper substrate, and therefore, the paper articles made according to the method of the present invention. Such additives may be incorporated into the paper, and therefore, the paper packaging (and packaging materials) made according to the method of the present invention in any conventional paper making process according to GA. Smook referenced above and references cited therein.

The paper substrate made according to the method of the present invention may also include optional substances including retention aids, sizing agents, binders, fillers, thickeners, and preservatives. Examples of fillers include, but are not limited to; clay, calcium carbonate, calcium sulfate hemihydrate, and calcium sulfate dehydrate. Examples of binders include, but are not limited to, polyvinyl alcohol, polyamide-epichlorohydrin, polychloride emulsion, modified starch such as hydroxyethyl starch, starch, polyacrylamide, modified polyacrylamide, polyol, polyol carbonyl adduct, ethanedial/polyol condensate, polyamide, epichlorohydrin, glyoxal, glyoxal urea, ethanedial, aliphatic polyisocyanate, isocyanate, 1,6 hexamethylene diisocyanate, diisocyanate, polyisocyanate, polyester, polyester resin, polyacrylate, polyacrylate resin, acrylate, carboxymethyl cellulose, urea, sodium nitrate, and methacrylate. Other optional substances include, but are not limited to silicas such as colloids and/or sols. Examples of silicas include, but are not limited to, sodium silicate and/or borosilicates. Another example of optional substances is solvents including but not limited to water.

The paper substrate made according to the method of the present invention may contain retention aids selected from the group consisting of coagulation agents, flocculation agents, and entrapment agents dispersed within the bulk and porosity enhancing additives cellulosic fibers.

Retention aids for the bulk-enhancing additives to retain a significant percentage of the additive in the middle of the paperboard and not in the periphery. Suitable retention aids function through coagulation, flocculation, or entrapment of the bulk additive. Coagulation comprises a precipitation of initially dispersed colloidal particles. This precipitation is suitably accomplished by charge neutralization or formation of high charge density patches on the particle surfaces. Since natural particles such as fines, fibers, clays, etc., are anionic, coagulation is advantageously accomplished by adding cationic materials to the overall system. Such selected cationic materials suitably have a high charge to mass ratio. Suitable coagulants include inorganic salts such as alum or aluminum chloride and their polymerization products (e.g. PAC or poly aluminum chloride or synthetic polymers); poly(diallyldimethyl ammonium chloride) (i.e., DADMAC); poly (dimethylamine)-co-epichlorohydrin; polyethylenimine; poly(3-butenyltrimethyl ammoniumchloride); poly(4-ethenylbenzyltrimethylammonium chloride); poly(2,3-epoxypropyltrimethylammonium chloride); poly(5-isoprenyltrimethylammonium chloride); and poly(acryloyloxyethyltrimethylammonium chloride). Other suitable cationic compounds having a high charge to mass ratio include all polysulfonium compounds, such as, for example the polymer made from the adduct of 2-chloromethyl; 1,3-butadiene and a dialkylsulfide, all polyamines made by the reaction of amines such as, for example, ethylenediamine, diethylenetriamine, triethylenetetraamine or various dialkylamines, with bis-halo, bis-epoxy, or chlorohydrin compounds such as, for example, 1-2 dichloroethane, 1,5-diepoxyhexane, or epichlorohydrin, all polymers of guanidine such as, for example, the product of guanidine and formaldehyde with or without polyamines. The preferred coagulant is poly(diallyldimethyl ammonium chloride) (i.e., DADMAC) having a molecular weight of about ninety thousand to two hundred thousand and polyethylenimene having a molecular weight of about six hundred to 5 million. The molecular weights of all polymers and copolymers herein this application are based on a weight average molecular weight commonly used to measure molecular weights of polymeric systems.

Another advantageous retention system suitable for the manufacture of the paper substrate of this invention is flocculation. This is basically the bridging or networking of particles through oppositely charged high molecular weight macromolecules. Alternatively, the bridging is accomplished by employing dual polymer systems. Macromolecules useful for the single additive approach are cationic starches (both amylase and amylopectin), cationic polyacrylamide such as for example, poly(acrylamide)-co-diallyldimethyl ammonium chloride; poly(acrylamide)-co-acryloyloxyethyl trimethylammonium chloride, cationic gums, chitosan, and cationic polyacrylates. Natural macromolecules such as, for example, starches and gums, are rendered cationic usually by treating them with 2,3-epoxypropyltrimethylammonium chloride, but other compounds can be used such as, for example, 2-chloroethyl-dialkylamine, acryloyloxyethyldialkyl ammonium chloride, acrylamidoethyltrialkylammonium chloride, etc. Dual additives useful for the dual polymer approach are any of those compounds which function as coagulants plus a high molecular weight anionic macromolecule such as, for example, anionic starches, CMC (carboxymethylcellulose), anionic gums, anionic polyacrylamides (e.g., poly(acrylamide)-co-acrylic acid), or a finely dispersed colloidal particle (e.g., colloidal silica, colloidal alumina, bentonite clay, or polymer micro particles marketed by Cytec Industries as Polyflex). Natural macromolecules such as, for example, cellulose, starch and gums are typically rendered anionic by treating them with chloroacetic acid, but other methods such as phosphorylation can be employed. Suitable flocculation agents are nitrogen containing organic polymers having a molecular weight of about one hundred thousand to thirty million. The preferred polymers have a molecular weight of about ten to twenty million. The most preferred have a molecular weight of about twelve to eighteen million. Suitable high molecular weight polymers are polyacrylamides, anionic acrylamide-acrylate polymers, cationic acrylamide copolymers having a molecular weight of about five hundred thousand to thirty million and polyethylenimenes having molecular weights in the range of about five hundred thousand to two million.

The paper substrate made according to the method of the present invention may contain high molecular weight anionic polyacrylamides, or high molecular weight polyethyleneoxides (PEO). Alternatively, molecular nets are formed in the network by the reaction of dual additives such as, for example, PEO and a phenolic resin.

The paper substrate made according to the method of the present invention may contain from 0.001 to 20 wt% of the optional substances based on the total weight of the substrate, preferably from 0.01 to 10 wt %, most preferably 0.1 to 5.0wt%, of each of at least one of the optional substances. This range includes 0.001, 0.002, 0.005, 0.006, 0.008, 0.01, 0.02, 0.03, 0.04, 0.05, 0.1, 0.2, 0.4, 0.5, 0.6, 0.7, 0.8, 0.9, 1,2, 4, 5, 6, 8, 10, 12, 14, 15, 16, 18, and 20wt% based on the total weight of the substrate, including any and all ranges and subranges therein.

The optional substances may be dispersed throughout the cross section of the paper substrate or may be more concentrated within the interior of the cross section of the paper substrate. Further, other optional substances such as binders for example may be concentrated more highly towards the outer surfaces of the cross section of the paper substrate. More specifically, a majority percentage of optional substances such as binders may preferably be located at a distance from the outside surface of the substrate that is equal to or less than 25%, more preferably 10%, of the total thickness of the substrate.

An example of a binder is polyvinyl alcohol in combination with, for example, starch or alone such as polyvinyl alcohol having a %hydrolysis ranging from 100% to 75%. The % hydrolysis of the polyvinyl alcohol may be 75, 76, 78, 80, 82, 84, 85, 86, 88, 90, 92, 94, 95, 96, 98, and 100%hdrolysis, including any and all ranges and subranges therein.

The paper substrate made according to the method of the present invention may then contain PVOH at a wt% of from 0.05wt% to 20wt% based on the total weight of the substrate. This range includes 0.001, 0.002, 0.005, 0.006, 0.008, 0.01, 0.02, 0.03, 0.04, 0.05, 0.1, 0.2, 0.4, 0.5, 0.6, 0.7, 0.8, 0.9, 1, 2, 4, 5, 6, 8, 10, 12, 14, 15, 16, 18, and 20wt% based on the total weight of the substrate, including any and all ranges and subranges therein.

The paper substrate made according to the present invention may contain a surface sizing agent such as starch and/or modified and/or functional equivalents thereof at a wt% of from 0.05wt% to 20wt%, preferably from 5 to 15 wt% based on the total weight of the substrate. The wt% of starch contained by the substrate may be 0.05, 0.1, 0.2, 0.4, 0.5, 0.6, 0.7, 0.8, 0.9, 1, 2, 4, 5, 6, 8, 10, 12, 14, 15, 16, 18, and 20wt% based on the total weight of the substrate, including any and all ranges and subranges therein. Examples of modified starches include, for example, oxidized, cationic, ethylated, hydroethoxylated, etc. Examples of functional equivalents are, but not limited to, polyvinyl alcohol, polyvinylamine, alginate, carboxymethyl cellulose, etc.

Further, the starch may be of any type, including but not limited to oxidized, ethylated, cationic and pearl, and is preferably used in aqueous solution. Illustrative of useful starches for the practice of this preferred embodiment of the invention are naturally occurring carbohydrates synthesized in corn, tapioca, potato and other plants by polymerization of dextrose units. All such starches and modified forms thereof such as starch acetates, starch esters, starch ethers, starch phosphates, starch xanthates, anionic starches, cationic starches and the like which can be derived by reacting the starch with a suitable chemical or enzymatic reagent can be used in the practice of this invention.

Useful starches may be prepared by known techniques or obtained from commercial sources. For example, the suitable starches include PG-280 from Penford Products, SLS-280 from St. Lawrence Starch, the cationic starch CatoSize 270 from National Starch and the hydroxypropyl No. 02382 from Poly Sciences, Inc.

Preferred starches for use in the practice of this invention are modified starches. More preferred starches are cationic modified or non-ionic starches such as CatoSize 270 and KoFilm 280 (all from National Starch) and chemically modified starches such as PG-280 ethylated starches and AP Pearl starches. More preferred starches for use in the practice of this invention are cationic starches and chemically modified starches.

In addition to the starch, small amounts of other additives may be present as well in the size composition. These include without limitation dispersants, fluorescent dyes, surfactants, deforming agents, preservatives, pigments, binders, pH control agents, coating releasing agents, optical brighteners, defoamers and the like. Such additives may include any and all of the above-mentioned optional substances, or combinations thereof.

The paper substrate made according to the method of the present invention may also include additives that render the paper substrate water resistant. Examples of such technologies include, but is not limited to those found in United States Patent 6,645,642 and USSNs 10/685,899; and 10/430,244. The paper substrate made according to the method of the present invention may be made as described herein and may be further made to account for these technologies in rendering a paper substrate that is both water-resistant and antimicrobial in tendency.

The paper substrate made according to the method of the present invention may also include additives such as bulking agents. A particularly preferred bulking agent include expandable microspheres such as those described in United States Patents 6,802,938; 6,846,529; 6,802,938; 5,856,389; and 5,342,649, as well as USSNs 10/121,301; 10/437,856; 10/967074; 10/967106; and 60/660703 which was filed March 11, 2005. The paper substrate made according to the method of the present invention may be made as described herein and may be further made to account for these bulking technologies in rendering a paper substrate that comprises antimicrobial tendency, water resistance, and/or a bulking agent such as a preferably microsphere.

The paper substate made according to the method of the present invention may be further combined with additional components in a manner that makes it useful as a paper facing for insulation which, in turn, may be utilized as a component and/or in a component for constructions such as homes, residential buildings, commercial buildings, offices, stores, and industrial buildings. Accordingly, insulation paper facing as well as the above-mentioned constructions are also aspects of the present invention.

Exemplified articles made from the paper substrate made according to the method of the present invention may include, but is not limited to, paper facing, envelopes, file folders, wall board tape, portfolios, folding cartons, food and beverage containers, etc. Any article containing a cellulose web and/or paper substrates may be made in a manner that incorporates the substrate made according to the method of the present invention.

The paper substrate may be made by contacting the antimicrobial compound with the cellulose fibers consecutively and/or simultaneously. Still further, the contacting may occur at acceptable concentration levels that provide the paper substrate made according to the method of the present invention to contain any of the above-mentioned amounts of cellulose and antimicrobial compound of the present invention isolated or in any combination thereof. More specifically, the paper substrate made according to the method of the present application may be made by adding and amount that is from 1.5 to 150 times that of the amount of antimicrobial compound that is to be retained within the paper substrate based upon dry weight of the paper substrate with the cellulose fibers. This amount may be 1.5,2, 5, 10, 15, 20, 25, 30, 35, 40, 45, 50, 55, 60, 65, 70, 75, 80, 85, 90, 95, 100, 110, 120, and 125 times that of the amount of antimicrobial compound that is to be retained within the paper substrate based upon dry weight thereof with the cellulose fibers, including any and all ranges and subranges therein. In accordance with the present invention, the contacting may occur so that from 0.1 to 100% of the amount of antimicrobial added to the cellulose fibers based upon dry weight of the paper substrate. The amount retained may be 0.1, 0.2, 0.5, 1, 2, 5, 10, 15, 20, 25, 30, 5, 40, 45, 50, 5, 60, 65, 70, 75, 80, 85, 90, 95 and 100% of the antimicrobial compound added to the cellulose fibers is retained in the paper substrate, including any and all ranges and subranges therein.

The contacting of the antimicrobial compound with the cellulose fibers may occur anytime in the papermaking process including, but not limited to the wet end, thick stock, thin stock, head box, size press and coater with the preferred addition point being at the thin stock. Further addition points include machine chest, stuff box, and suction of the fan pump.

The paper substrate maybe made by contacting further optional substances with the cellulose fibers as well. The contacting may occur anytime in the papermaking process including, but not limited to the thick stock, thin stock, head box, size press, water box, and coater. Further addition points include machine chest, stuff box, and suction of the fan pump. The cellulose fibers, antimicrobial compound, and/or optional/additional components may be contacted serially, consecutively, and/or simultaneously in any combination with each other. The cellulose fibers and antimicrobial compound may be pre-mixed in any combination before addition to or during the paper-making process.

The paper substrate may be pressed in a press section containing one or more nips. However, any pressing means commonly known in the art of papermaking may be utilized. The nips may be, but is not limited to, single felted, double felted, roll, and extended nip in the presses. However, any nip commonly known in the art of papermaking may be utilized.

The paper substrate may be dried in a drying section. Any drying means commonly known in the art of papermaking may be utilized. The drying section may include and contain a drying can, cylinder drying, Condebelt drying, IR, or other drying means and mechanisms known in the art. The paper substrate may be dried so as to contain any selected amount of water. Preferably, the substrate is dried to contain less than or equal to10% water.

The paper substrate may be passed through a size press, where any sizing means commonly known in the art of papermaking is acceptable. The size press, for example, may be a puddle mode size press (e.g. inclined, vertical, horizontal) or metered size press ( e.g. blade metered, rod metered). At the size press, sizing agents such as binders may be contacted with the substrate. Optionally these same sizing agents may be added at the wet end of the papermaking process as needed. After sizing, the paper substrate may or may not be dried again according to the above-mentioned exemplified means and other commonly known drying means in the art of papermaking. The paper substrate may be dried so as to contain any selected amount of water. Preferably, the substrate is dried to contain less than or equal to10% water.

The paper substrate may be calendered by any commonly known calendaring means in the art of papermaking. More specifically, one could utilize, for example, wet stack calendering, dry stack calendering, steel nip calendaring, hot soft calendaring or extended nip calendering, etc.

The paper board and/or substrate made according to the method of the present invention may also contain at least one coating layer, including two coating layers and a plurality thereof. The coating layer may be applied to at least one surface of the paper board and/or substrate, including two surfaces. Further, the coating layer may penetrate the paper board and/or substrate. The coating layer may contain a binder. Further the coating layer may also optionally contain a pigment. Other optional ingredients of the coating layer are surfactants, dispersion aids, and other conventional additives for printing compositions.

The coating layer may contain a coating polymer and/or copolymer which may be branched and/or crosslinked Polymers and copolymers suitable for this purpose are polymers having a melting point below 270 °C. and a glass transition temperature (Tg) in the range of -150 to +120 °C. The polymers and copolymers contain carbon and/or heteroatoms. Examples of suitable polymers may be polyolefins such as polyethylene and polypropylene, nitrocellulose, polyethylene terephthalate, Saran and styrene acrylic acid copolymers. Representative coating polymers include methyl cellulose, carboxymethyl cellulose acetate copolymer, vinyl acetate copolymer, styrene butadiene copolymer, and styrene-acrylic copolymer. Any standard paper board and/or substrate coating composition may be utilized such as those compositions and methods discussed in U.S. Patent No. 6,379,497.

The coating layer may include a plurality of layers or a single layer having any conventional thickness as needed and produced by standard methods, especially printing methods. For example, the coating layer may contain a basecoat layer and a topcoat layer. The basecoat layer may, for example, contain low density thermoplastic particles and optionally a first binder. The topcoat layer may, for example, contain at least one pigment and optionally a second binder which may or may not be a different binder than the first. The particles of the basecoat layer and the at least one pigment of the topcoat layer may be dispersed in their respective binders.

The invention can be prepared using known conventional techniques. Methods and apparatuses for forming and applying a coating formulation to a paper substrate are well known in the paper and paperboard art. See for example, G.A. Smook referenced above and references cited therein. All such known methods can be used in the practice of this invention and will not be described in detail. For example, the mixture of essential pigments, polymeric or copolymeric binders and optional components can be dissolved or dispersed in an appropriate liquid medium, preferably water.

The paper substrate may be microfinished according to any microfinishing means commonly known in the art of papermaking. Microfinishing is a means involving frictional processes to finish surfaces of the paper substrate. The paper substrate may be microfinished with or without a calendering means applied thereto consecutively and/or simultaneously. Examples of microfinishing means can be found in United States Published Patent Application 20040123966 and references cited therein.

The paper and paperboard web made according to the method of this invention can be used in the manufacture of a wide range of paper-based products where microbial resistance is desired using conventional techniques. For example, paper and paperboard webs formed according to the invention may be utilized in a variety of office or clerical applications. The web is preferably used for making file folders, manila folders, flap folders such as Bristol base paper, and other substantially inflexible paperboard webs for use in office environments, including, but not limited to paperboard containers for such folders, and the like. The manufacture of such folders from paper webs is well known to those in the paper converting arts and consists in general of cutting appropriately sized and shaped blanks from the paper web, typically by "reverse" die cutting, and then folding the blanks into the appropriate folder shape followed by stacking and packaging steps. The blanks may also be scored beforehand if desired to facilitate folding. The scoring, cutting, folding, stacking, and packaging operations are ordinarily carried out using automated machinery well-known to those of ordinary skill on a substantially continuous basis from rolls of the web material fed to the machinery from an unwind stand.

Any and all additional methodologies of making a paper substrate may be utilized as found in conventional paper making arts such as that found in G.A. Smook referenced above and references cited therein, so long as the antimicrobial compound is contacted with the cellulose fiber.

The paper substrate made according to the method of the present invention, including any article and/or packaging material made therefrom is also expected to have a better performance under conditions that test wet-bleed, transfer, wet rub, wet smear, dry rub resistance, condensation rub resistance, chain lube rub resistance, product rub resistance, and adhesion by scratch resistance. Still further, the paper substrate made according to the method of the present invention, including any article and/or packaging material made therefrom is also expected to have an increased antimicrobial tendency after such products are scraped, scratched, abraded, etc (as tested by such tests disclosed herein) as compared to those substrates, articles and packaging that do not contain the antimicrobial compound according to the present invention.

The present invention is explained in more detail with the aid of the following embodiment example which is not intended to limit the scope of the present invention in any manner.

### EXAMPLES

### Example 1

A paper facing paper substrate was made by pre-mixing 100ppm of an active ingredient (4,5-diebloro-2-n-octyl-4-isothiazolin-3-one) based upon dry weight tons with cellulose fibers during the paper making process.

The antimicrobial tendency of the paper substrate was tested using ASTM methods D 2020A. The results demonstrated that the paper substrate was resistant to Aspergillus niger, Aspergillus terreus, and Chaetomium globosum after two (2 weeks) by demonstrating no growth of such organisms and/or any other organisms during such time.

The antimicrobial tendency of the paper substrate was tested using ASTM C-1338-00. The results demonstrated that the paper substrate was resistant to Aspergillus niger, Aspergillus versicolor, Chaetomium globosum, Penicillium funiculosum, and Aspergillus flavus after 7 days by demonstrating no growth of such organisms and/or any other organisms during such time.

The antimicrobial tendency of the paper substrate was tested using ASTM G 21-96. The results demonstrated that the paper substrate was resistant to Aspirgillus niger, Penicillium pinophilum 14, Chaetomium globosum, Gliocladium virens, and Aureobasidium pullulans after 28 days by demonstrating no growth of such organisms and/or any other organisms during such time.

### Example 2

A paper facing was made by adding standard asphalt to the paper facing paper substrate of Example 1. Then, the resultant paper facing was heated and fiberglass was applied thereto so as to simulate the process of making a paper facing insulation containing the paper substrate of Example 1, asphalt and fiberglass insulation. Both standard asphalt and asphalt treated with an antimicrobial compound as utilized in separate embodiments. The paper facings were tested using ASTM methods D 2020A and G 21-96.

After 7 days the paper facing of Example 2 containing standard asphalt had no growth on either the paper substrate and/or the asphalt as measured according to both the D 2020A and G 21-96 tests. After 14 days, the paper facing of Example 2 containing standard asphalt had no growth on the paper substrate according to the D 2020A test, but had heavy growth on the asphalt according to this test After 14 days, the paper facing of Example 2 containing standard asphalt had slight growth according to the G 21-96 test. After 21 days, the paper facing of Example 2 containing standard asphalt had moderate growth according to the G 21-96 test After 28 days, the paper facing of Example 2 containing standard asphalt had heavy growth according to the G 21-96 test

After 7 days the paper facing of Example 2 containing the treated asphalt had no growth on either the paper substrate and/or the asphalt as measured according to both the D 2020A and G 21-96 tests. After 14 days, the paper facing of Example 2 containing treated asphalt had no growth on the paper substrate, nor the asphalt according to the D 2020A test After 14 days, the paper facing of Example 2 containing treated asphalt had no growth according to the G 21-96 test. After 21 days, the paper facing of Example 2 containing treated asphalt had slight growth according to the G 21-96 test. After 28 days, the paper facing of Example 2 containing treated asphalt had moderate growth according to the G 21-96 test.

### Comparative Example 1

A paper facing containing a paper substrate, standard asphalt, and fiberglass insulation was made in parallel according to that process outlined in Example 2 except that the paper substrate did not contain any antimicrobial compound at all.

The paper facing of Comparative Example 1 had moderate growth everywhere after 7 days and heavy growth everywhere after 14 days according to the D 2020A test. Further the paper facing of Comparative Example 1 had moderate growth, heavy growth, heavy growth, and heavy growth everywhere after 7, 14, 21, and 28 days, respectively, according to the G 21-96 test.

### Example 3

A file folder was made from a substrate in which Busan 1200 was added to cellulose fibers at the size press. The substrate was reverse die-cut.

### Example 4

A file folder was made from a substrate in which Busan 1200 and a stearylated melamine/paraffin wax obtained commercially from RohmNova under the tradename Sequapel® 414 were both added to cellulose fibers at the size press. The substrate was reverse die-cut.

### Comparative Example 2

A file folder was made from a standard substrate made from cellulose fibers and reverse die-cut. This is the standard control.

### Example 5

As tested by the ASTM standard E2180-01 test, Examples 3 and 4 showed a 73.70% and 87.70% reduction in the growth of Staphylococcus aureus as compared to that of the Comparative Example 2.

### Example 6

As tested by the ASTM standard D 2020-92 test, Examples 3 and 4 showed no growth after 7 and 14 days respectively of *Aspergillus niger, Aspergillus terreus, and Chaetomium globosum*. However, Comparative Example 2 had growth of *Aspergillus niger, Aspergillus terreus, and Chaetomium globosum at both 7 and 14 days.*

### Example 7

After abrasion of a conventional file folder made of a paper substrate coated with Busan 1200, the file folder will fail ASTM D 2020 testing after 7 and 14 days as described above, while a file folder containing a substrate that contains Busan 1200 by application at the size press and/or the wet end of the papermaking process will not show growth of *Aspergillus niger, Aspergillus terreus, and Chaetomium globosum* after 7 and 14 days.

## Claims

1. A method of making a paper substrate, comprising
contacting cellulose fibers with an antimicotic or fungicide during or prior to a papermaking process, wherein the contacting occurs at the size press, **characterized in that** said antimicotic or fungicide is at produces a paper substrate comprising a first layer comprising a web of cellulose fibers and a size-press applied coating layer in contact with a portion of at least one surface of the first layer so that from 25 to 75% of the size-press applied coating layer interpenetrates the first layer.
least one member selected from the group consisting of silver zeolite, dichloro-octyl-isothiazolone, 4,5-dichloro-2-n-octyl-3(2H)-isothiazolone, Tri-n-butylin oxide, borax, G-4, chlorothalonil, Alkyl-dimethylbenzyl-ammonium saccharinate, dichloropeyl-propyl-dioxolan-methlyl-triazole, alpha-chlorphenyl, ethyl-dimethylethyl-trazole-ethanol, benzimidazol, 2-(thiocyanomethythio)benzothiazole, alpha-2(-(4-chlorophenyl)ethyl)-alpba-(1-1-dimethylethyl)-1H-1,2,4-triazole-1-ethanol, (1-[[2-(2,4-dichlorophenyl)-4-propyl-1,3-dioxolan-2-yl]-methyl]-1H-1,2,4-triazole, alkyl dimethylbenzyl ammonium saccharinate, 2-(methoxy-carbarnoyl)-benzimidazol, tetracholorisophthalonitrile, P-[(diiodomethyl) sulfonyl] toluol, methyl alcohol, 3-(trimethoxysilyl) propyldimethyl octadecyl ammonium chloride, chloropropyltrimethylsilane, dimethyl octadecyllamine, propionic acid, 2-(4-thiazolyl)benzimidazole,1,2-benzisothiazolin-3-one,2-N-octyl-4-isthiazolin-3-one diethylene glycol monoethyl ether, ethylene glycol, propylene glycol, hexylene glycol, tribuloxyethyl phosphate, 2-pyridinethio-1-oxide, potassium sorbate, diiodomethyl-p-tolysulfone, and thiocyanomethythio-benzothiazole, and said contacting.

2. The method according to Claim 1, further comprising
die-cutting at least one surface of the paper substrate to form a file folder.

3. A paper substrate prepared by a method according to claim 1.

4. A file folder prepared by a method according to claim 2.

## Patentansprüche

1. Verfahren zur Herstellung eines Papiersubstrats, umfassend:
In-Kontakt-Bringen von Cellulosefasern mit einem Antimykotikum oder Fungizid während oder vor einem Papierherstellungsprozess, wobei das In-Kontakt-Bringen an der Leimpresse erfolgt, **dadurch gekennzeichnet, dass** das Antimykotikum oder Fungizid zumindest ein aus jener Gruppe ausgewählter Teil ist, die besteht aus Silber-Zeolith, Dichloroctylisothiazolon, 4,5-Dichlor-2-n-octyl-3(2H)-isothiazolon, Tri-n-butylzinnoxid, Borax, G-4, Chlorthalonil, Alkyldimethylbenzylammoniumsaccharinat, Dichlorphenyl-propyl-dioxolanmethyl-triazol, alpha-Chlorphenyl, Ethyl-dimethylethyl-triazol-ethanol, Benzimidazol, 2-(Thiocyanomethylthio)benzothiazol, alpha-2(-(4-Chlorphenyl)ethyl)-alpha-(1-1-dimethylethyl)-1H-1,2,4-triazol-1-ethanol, (1-[[2-(2,4-Dichlorphenyl)-4-propyl-1,3-dioxolan-2-yl]-methyl]-1H-1,2,4-triazol, Alkyldimethylbenzylammoniumsaccharinat, 2-(Methoxy-carbamoyl)-benzimidazol, Tetrachlorisophthalonitril, p-[(diiodmethyl)sulfonyl]toluol, Methylalkohol, 3-(Trimethoxysilyl)propyldimethyloctadecylammoniumchlorid, Chlorpropyltrimethylsilan, Dimethyloctadecylamin, Propionsäure, 2-(4-Thiazolyl)benzimidazol, 1,2-Benzisothiazolin-3-on, 2-n-Octyl-4-isothiazolin-3-on, Diethylenglykolmonoethylether, Ethylenglykol, Propylenglykol, Hexylenglykol, Tributoxyethylphosphat, 2-Pyridinthiol-1-oxid, Kaliumsorbat, Diiodmethyl-p-tolysulfon und Thiocyanomethylthio-benzothiazol, und das In-Kontakt-Bringen ein Papiersubstrat hervorbringt, das eine Bahn aus Cellulosefasern umfassende erste Lage und eine mittels Leimpresse aufgetragene Beschichtungslage umfasst, die in Kontakt mit einem Abschnitt zumindest einer Fläche der ersten Lage ist, so dass 25 bis 75% der mittels Leimpresse aufgetragenen Beschichtungslage die erste Lage durchdringen.

2. Verfahren nach Anspruch 1, weiterhin umfassend:
Stanzen zumindest einer Fläche des Papiersubstrats, um einen Ordner zu bilden.

3. Papiersubstrat, hergestellt durch ein Verfahren nach Anspruch 1.

4. Ordner, hergestellt durch ein Verfahren nach Anspruch 2.

## Revendications

1. Procédé de fabrication d'un substrat de papier, comprenant la mise en contact de fibres de cellulose avec un agent antimycosique ou antifongique préalablement au processus de fabrication du papier ou au cours de celui-ci, dans lequel la mise en contact se produit au niveau de la presse encolleuse, **caractérisé en ce que** ledit agent antimycosique ou antifongique consiste au moins en un élément choisi dans le groupe constitué par la zéolithe d'argent, la dichloro-octyl-isothiazolone, la 4,5-dichloro-2-n-octyl-3(2H)-isothiazolone, l'oxyde de tri-n-butyline, le borax, le G-4, le chlorothalonile, le saccharinate d'alkyl-diméthylbenzyl-ammonium, le dichlorophényl-propyl-dioxolane-méthyl-triazole, l'alpha-chlorophényle, l'éthyl-diméthyléthyl-triazole-éthanol, le benzimidazole, le 2- (thiocyanométhylthio)benzothiazole, l'alpha-2(-(4-chlorophényl)éthyl)-alpha-(1-1-diméthyléthyl)-1H-1,2,4-triazole-1-éthanol, le (1-[[2-(2,4-dichlorophényl)-4-propyl-1,3-dioxolan-2-yl]-méthyl]-1H-1,2,4-triazole, le saccharinate d'alkyl diméthylbenzyl ammonium, le 2-(méthoxy-carbamoyl)-benzimidazole, le tétracholoro-isophtalonitrile, le P-[(diiodométhyl)sulfonyl]toluène, l'alcool méthylique, le chlorure de 3-(triméthoxysilyl)propyldiméthyloctadécyl ammonium, le chloropropyltriméthylsilane, la diméthyl octadécylamine, l'acide propionique, le 2-(4-thiazolyl)benzimidazole, la 1,2-benzo-isothiazolin-3-one, la 2-N-octyl-4-isothiazolin-3-one, l'éther monoéthylique de diéthylène glycol, l'éthylène glycol, le propylène glycol, l'hexylène glycol, le phosphate de tributoxyéthyle, le 1-oxyde de 2-pyridine-thiol, le sorbate de potassium, la diiodométhyl-p-tolylsulfone, et le thiocyanométhylthio-benzothiazole, et ladite mise en contact produit un substrat de papier comportant une première couche comprenant un tissu de fibres de cellulose et une couche de revêtement appliquée à la presse encolleuse qui est en contact avec une partie d'au moins une surface de la première couche de sorte que de 25 à 75 % de la couche de revêtement appliquée à la presse encolleuse interpénètre la première couche.

2. Procédé selon la revendication 1, comprenant en outre le découpage à l'emporte-pièce d'au moins une surface du substrat de papier pour former une chemise de classement.

3. Substrat de papier préparé suivant le procédé selon la revendication 1.

4. Chemise de classement préparée suivant le procédé selon la revendication 2.
